(19) Europäisches Patentamt
European Patent Office
Office européen des brevets

(11) **EP 1 181 812 B1**

(12) **EUROPEAN PATENT SPECIFICATION**

(45) Date of publication and mention
of the grant of the patent:
**30.09.2009 Bulletin 2009/40**

(51) Int Cl.:
***H04N 1/60*** *(2006.01)*

(21) Application number: **00936285.6**

(22) Date of filing: **24.05.2000**

(86) International application number:
**PCT/US2000/014376**

(87) International publication number:
**WO 2000/074372 (07.12.2000 Gazette 2000/49)**

(54) **CONSTRAINED MULTI-DIMENSIONAL COLOR TRANSFORMATION**

MEHRDIMENSIONALE FARBTRANSFORMATION MIT BESCHRÄNKUNGEN

CONTRAINTES APPLIQUEES A UNE TRANSFORMATION DE COULEUR MULTIDIMENSIONNELLE

(84) Designated Contracting States:
**DE**

(30) Priority: **28.05.1999 US 136658 P**

(43) Date of publication of application:
**27.02.2002 Bulletin 2002/09**

(73) Proprietor: **Eastman Kodak Company
Rochester NY 14650-2201 (US)**

(72) Inventors:
• **FISCHER, Timothy, A.
Saint Paul, MN 55164-0898 (US)**

• **ROZZI, William, A.
Saint Paul, MN 55164-0898 (US)**

(74) Representative: **Hilleringmann, Jochen et al
Bahnhofsvorplatz 1,
Deichmannhaus
50667 Köln (DE)**

(56) References cited:
**EP-A- 0 534 871      EP-A- 0 611 231
EP-A- 0 779 736      WO-A-93/20648
DE-A- 4 335 143      GB-A- 2 213 674
US-A- 4 831 409      US-A- 5 359 436
US-A- 5 764 795**

**EP 1 181 812 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to color imaging and, more particularly, to multidimensional transformation of color image data.

**BACKGROUND**

Color imaging devices produce combinations of different colorants to form color images on print media such as paper or film. Many imaging devices make use of combinations of cyan, magenta, yellow, and black (CMYK) to reproduce the gamut of a color image. Ideally, different imaging devices produce identical color output. Differences in hardware and print media, however, can result in substantial variation.

To provide a better colorimetric match, many color management systems execute color transformations. A color transformation manipulates input color data to drive the output of a destination device toward the output of a source device. A color transformation can be applied, for example, to match the output of a color proofing system to that of a printing press.

From EP-A-0611231 there is known a method for transforming an input color space to an output color space where each of a plurality of specified colors and/or color regions are constrained to be transformed by anyone of a plurality of explicitly specified color calibration or color enhancement strategies. This reference describes the use of constraints to confine destination device-dependent coordinates to values that colorimetrically a specify particular regions in a device-independent color space.

Moreover, EP-A-0534871 discloses a method for selective interception of a graphics rendering operation for effecting image data modification, whereby color image data intended for reproduction on an image reproduction means may by provided to a functional engine for modification according to one or more functional transforms.

Finally, from EP-A-0779736 it is known to use data conversion tables such as a three-dimensional look-up table (LUT) for color conversions.

Common color transformation functions are either one-dimensional (1-D) or multi-dimensional (M-D). A one-dimensional transformation relies on single-input, single-output functions that are applied on a channel-independent basis. In other words, color data for each colorant channel, e.g., C, M, Y, and K, are manipulated independently of other channels to produce a desired visual output.

A multi-dimensional transformation function, in contrast, may specify a mixture of the output colorants for a given input, taking into account interactions between the different colorant channels. For digital color proofing, multi-dimensional functions generally are more effective in achieving a color match between the images produced by the source and destination devices. In this example, the source refers to the device to be matched, e.g., a printing press. The destination refers to the device for which the transformation will be applied, e.g., a digital color proofer.

**SUMMARY**

The present invention is directed to a method and system for constrained multi-dimensional color transformation, as defined in claims 1 and 10, respectively, as well as a computer-readable medium containing program code for implementation of such a system and method. The system and method apply constraints to the transformation function to preserve the presence or absence of particular color information while achieving high accuracy color matches. The system and method can be implemented via software executed by a general purpose computer.

With a constrained multi-dimensional color transformation, a destination device, such as a color proofer, can provide an accurate color match relative to a source or "target" device, such as a printing press. In particular, the constraints can preserve selected color information that is present in an image produced by the source device, and prevent addition of other selected color information that would not be present in the source device image.

In a halftone imaging device, the constraints prevent the removal or addition of dots from and to the image produced by the destination device. Use of unconstrained multi-dimensional (M-D) color transformation functions can cause the destination device to produce halftone dots for primary colors that would not be present in a corresponding region of an image produced by the source device. In particular, the unconstrained multi-dimensional transformation can result in substitution and removal of particular colorants in the destination image relative to the colors specified in the source image.

Loss of "dot-integrity" between the source and destination devices limits the effectiveness of the reproduction, particularly when it is used to diagnose color problems in the source device, e.g., during a printing press run. One-dimensional (1-D) transformation functions generally preserve the presence and absence of halftone dots, but provide less accurate color matching than unconstrained M-D transformation functions.

A constrained M-D transform (CMT), in accordance with an embodiment of the present invention, achieves the advantages of both 1-D and M-D transformation functions. Specifically, a CMT preserves the presence and absence of colorants from input to output, and provides more accurate color matching.

Thus, a CMT can provide significantly improved color matching relative to 1-D transformation, and the dot preservation generally unavailable in unconstrained M-D transformation. Indeed, depending on the characteristics of the source and destination devices, the color matching performance of a CMT can approach that of unconstrained M-D transforms.

## BRIEF DESCRIPTION OF THE DRAWINGS

The invention will be described in more detail refering to the drawings in which:

FIG. 1 is a block diagram illustrating a system for implementation of a constrained multi-dimensional color transformation function;

FIG. 2 is a block diagram illustrating a method for formulation of a constrained multi-dimensional color transformation function;

FIG. 3 is a diagram of a constraint region within a color space; and

FIG. 4 is a graph of comparative color error cumulative histograms for various color transformation techniques.

Like reference numbers and designations in the various drawings indicate like elements.

## DETAILED DESCRIPTION

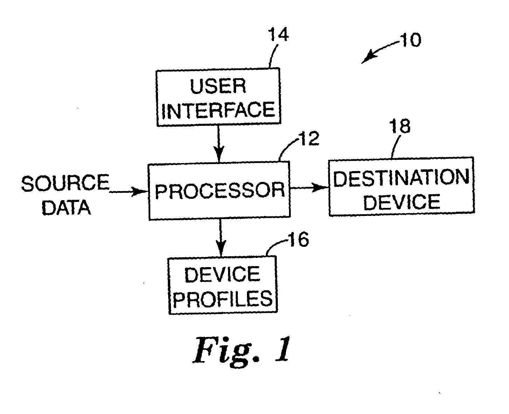

FIG. 1 is a block diagram illustrating a system 10 for implementation of a constrained multi-dimensional color transformation function. As shown in FIG. 1, system 10 may include a processor 12, a user interface 14, a memory 16 storing device profiles, and a destination device 18 for reproduction of a color image. Processor 12 may take the form of a general purpose microprocessor and can be integrated with or form part of a PC, Macintosh, or computer workstation. User interface 14 may include a conventional keyboard and pointing device such as a mouse or trackball, if desired. User interface 14 also may include a computer monitor, such as a CRT or flat panel display, that provides textual and/or graphic feedback to the user. Memory 16 may include random access memory (RAM) storing program code that is accessed and executed by processor 12. The program code can be loaded into memory 14 from another memory device, such as a read only memory (ROM), a fixed hard drive, or a removable media device associated with system 10. In particular, the program code can be initially carried on computer-readable media such as magnetic, optical, magneto-optic or other disk or tape media. Alternatively, the program code can be carried on electronic computer-readable media such as EEPROM.

In operation, processor 12 receives source data representative of color image data for a source device, and retrieves device profiles corresponding to the source device and the destination device from memory 16. The device profiles characterize the color responses of the source device and destination device 18. In particular, the device profiles may include forward models that convert respective device-dependent coordinates associated with the source and destination device, e.g., CMYK, to a device-independent color space, e.g., L*a*b*. Based on the device profiles retrieved from memory 16, processor 12 formulates a multi-dimensional color transformation function for accurate color matching between the source and destination devices. The transformation ordinarily is applied to the source image data prior to application of halftone screening. The transformation function may take the form of a multi-dimensional lookup table (LUT), mathematical equations, or a combination of both. Processor 12 applies the color transformation function to the source data to produce destination data that drives destination device 18 to produce a more accurate visual match to the output of the source device.

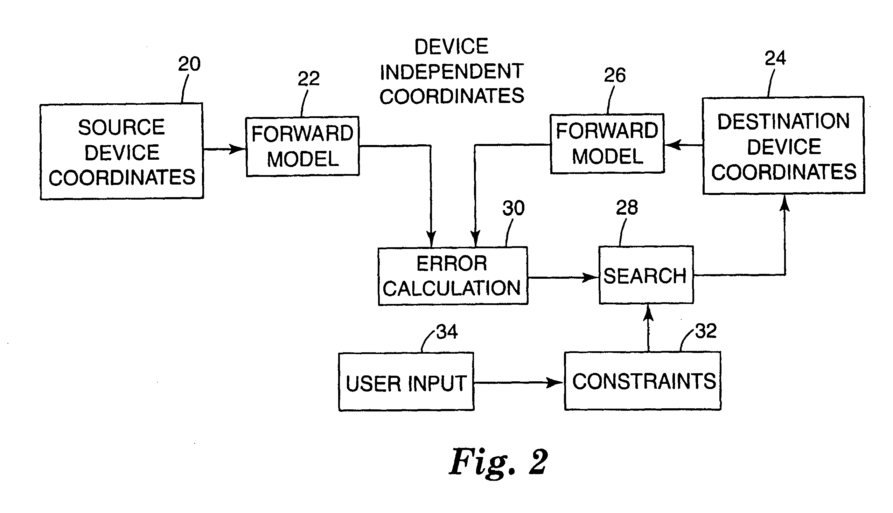

FIG. 2 is a block diagram illustrating a method for formulation of a constrained multi-dimensional color transformation function. As shown in FIG. 2, given a set of source data in source device-dependent coordinates, indicated by reference numeral 20, processor 12 applies a forward model 22 to convert the values to a device-independent color space. The forward model may convert device-dependent coordinates such as CMYK data, for example, to device-independent coordinates such as CIE L*a*b* data. To produce destination data in destination device-dependent coordinates, e.g., CMYK, processor 12 performs a search of destination device-dependent coordinates that, when applied to the forward model for the destination device, approximate the device-independent coordinates generated for the source data. Again, the device-independent coordinates may be, for example, CIE L*a*b* data. With further reference to FIG. 2, destination device coordinates 24 are applied to destination device forward model 26 to produce the device-independent coordinates.

A search module 28 executed by processor 12 governs the search for matching coordinates. Search module 28 selects a set of starting destination device coordinates, and then monitors the resulting error calculated between the device-independent coordinates for the source device and those for the destination device. If the error calculation, indicated by reference numeral 30, produces an unacceptable error, search module 28 seeks destination device coordinates that minimize the calculated error. The process continues in an iterative manner until the calculated error is reduced to an acceptable degree. When the error is sufficiently reduced, search module 28 has found destination device coordinates necessary to produce a desired visual match with the source device coordinates. On this basis, processor 12 generates the M-D color transformation function that is applied to transform source device color data to destination device color data.

If the search is unconstrained, the destination device coordinates may produce an acceptable visual match, but lack dot integrity. For this reason, search module 28 is subject to a set of constraints 32. The constraints 32 can be specified by user input 34 or by reference to predetermined default constraints applicable to particular source and destination devices. The constraints 32 prevent the selection of destination device coordinates that would remove or add particular color information from the source device. In this manner, dot integrity is maintained while achieving high color match accuracy. Dot integrity can be a concern when diagnosing color problems in a source device such as a printing press.

In particular, the presence in a destination device proof of dots that would not be produced by the source, but which nevertheless provide an acceptable colorimetric match, can confound a press technician. In other words, the destination image may produce an acceptable colorimetric match, but incorporate or remove dots for a particular colorant in a manner different from the actual source device. To avoid this problem, constraints are applied that prevent addition or removal of selected dots. The formulation of constraints to provide a constrained M-D color transformation function (CMT) will now be described in greater detail.

To determine the optimal color transformation between two devices, a colorimetric model of each device is required. Colorimetric models specify the relationship between device-specific color coordinates, e.g., CMYK, and a device-independent color representation such as reflectance spectra or CIE L*a*b* values. This relationship can be expressed as a multi-dimensional lookup table (LUT), as mathematical equations, or as a combination of the two. An International Color Consortium (ICC) profile, for example, uses either a LUT-based or equation-based representation to convert from device-dependent coordinates to device-independent coordinates, referred to as a Profile Connecting Space (PCS). This is often referred to as the forward model for the device. ICC profiles also contain an inverse model governing transformation from the PCS back to device coordinates for a specific set of conditions such as gamut mapping, total ink limits, gray component replacement (GCR), under color removal (UCR), etc. Use of the inverse model, however, is not necessary for application of the CMT.

Instead, as illustrated in FIG. 2, the CMT makes use of the forward model of the source device to determine the device-independent color, followed by a constrained search of the forward model for the destination device to find an optimal match in the color space of the destination device. In this manner, the constraints are embedded in the resultant transformation. In other words, the transformation is generated based in part on the constraints. The transformation typically is applied before halftone screening of the image. For a CMYK source to CMYK destination transformation, the K versus CMY tradeoff can be constrained by maintaining the integrity of the black channel or through a gray component replacement (GCR)-type relationship. In this manner, a one-to-one mapping from source CMYK to destination CMYK can be achieved in the transformation. Without constraints, it is possible to have two nearly identical colors, as defined in the PCS, map to very different device coordinates, resulting in image artifacts.

In addition to constraints that ensure a one-to-one mapping, further constraints can be applied to limit the device-dependent colors to realizable values such that it is impossible to produce less than 0% or greater than 100% of a given colorant. One way of visualizing this type of constraint is to think of an $n$-dimensional hypercube ("box"), with each dimension representing a device color channel ranging from 0% to 100%. The solution must be contained within the defined box. These constraints ensure physically realizable results, but do not prevent the transformation from accessing any specific region of the destination color space. As such, a color transformation that only uses these box constraints is often referred to as "unconstrained."

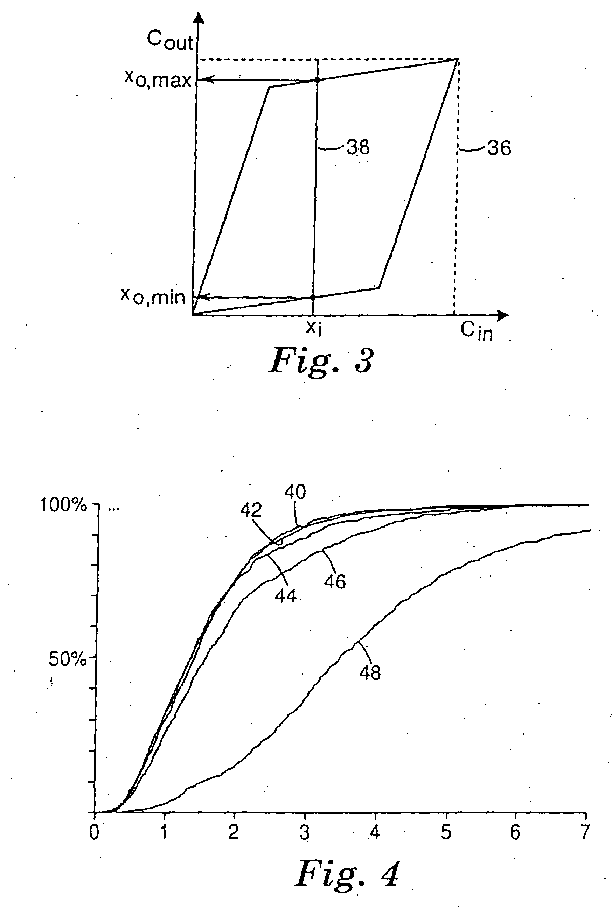

The unconstrained M-D transform is constrained only by the physical limits of the device. If the constraints on the output colorants are generalized to be functions of the input colorants rather than constant ("box") values, a dot-preserving type of CMT can be achieved. FIG. 3 illustrates a simple constraint function on a single colorant, cyan (C). In this case, the square region bounded by the dashed line and the $C_{in}$ and $C_{out}$ axes represents the full 0% to 100% range ("box") of the input and output colorants. Gray regions are excluded from the search domain and the white center portion is the valid region for the colorant. Consequently, the transformation produced by the search excludes the gray region. The gray along the $C_{out}$ axis, therefore, represents the constraint "do not add the colorant if it does not exist in the source," while gray along the $C_{in}$ axis represents "do not remove a colorant if it does exist in the source."

For example, if there is no colorant in the source ($C_{in}$ = 0%), then the constraints limit the output to $C_{out}$ = 0%. If $C_{in}$ = 50%, $C_{out}$ could range from the lower to upper bold lines, which could be at 0% and 100%, respectively, even though that is not what is shown in the example region of FIG. 3. The lower limit ensures that if a given colorant exists, it is not completely removed to obtain a color match. The upper limit increases from zero to allow a smooth transition from the region where the destination colorant cannot be added (i.e., $C_{in}$ = 0%) to where it can be varied significantly to obtain a color match.

Thus, for digitally addressed printing devices, there are simple bound constraints on the input and output digital values ($C_{in}$ and $C_{out}$, respectively), which correspond to the limits on the digital representation of the colorant amount. In the constraint region of FIG. 3, simple bound constraints are represented, for a single colorant channel, by dashed square 36. For N colorant channels, simple bound constraints illustrated by square 36 define an N-dimensional hypercube of the addressable color values for the respective device. When determining the destination device coordinates that provide a color match for the color rendered by the source device with a given set of input (or source) device coordinates, the matching process may select from any of the destination coordinates within this hypercube.

In a constrained matching process, selected volumes within the hypercube are excluded from consideration during the search. For example, if the source device coordinate value for one channel were $C_{in}=x_i$, then using the example constraint boundaries in FIG. 3 the coordinate values of the destination device would be limited to the range $[x_{o,min}, x_{o,max}]$. These limits to the allowable range are determined by the extent of the permissible region, defined by boundary 38 and shown in white in FIG. 3, along a vertical line at $C_{in}=x_i$, as demonstrated above. Similar constraints applied to other channels result in a sub-volume of the original hypercube defining the new range of destination coordinates allowed when searching for matching coordinate values according to a process as shown in FIG. 2.

These constraint regions can be applied in the general case on a colorant-by-colorant basis. More typically, a few specific constraint conditions are particularly useful in CMYK to CMYK matching. Exemplary constraint conditions are:

(1) Full multi-dimensional. In this case, the search process is allowed to use device coordinates throughout the full 0% to 100% box. This constraint condition provides the benefits of full multi-dimensional transformation, but may suffer from reduced dot integrity.
(2) Do not add or remove colorants. In this case, the search process applies constraint regions such as those shown in FIG. 3 to all colorants.
(3) Do not add or remove black. In this case, the search process applies the constraint only to the K channel for CMYK.
(4) Do not add or remove chromatic colorants. In this case, the search process applies the constraint to CMY but not K. The constraint condition also may be applied to subsets of the chromatic colorants. The chromatic colorants may include, in addition to CMY, other colorants used in the applicable process.

In addition, the "do not add" and "do not remove" constraints can be individually applied to the above conditions. This would correspond to removal of the upper or lower gray region of FIG. 3 for given colorants.

As a further option, particular constraint conditions can be selected in combination to achieve specific results. To better maintain black channel purity, for example, it may be desirable to combine "full multi-dimensional" and "do not add chromatic colorants" constraint conditions. Image elements such as text or line art typically use only the black channel to achieve sharpness and avoid misregistration effects. Other elements such as drop-shadows often use only the black channel to minimize hue shifts as the output device drifts.

When a region of the source image contemplates the printing of a single-color black, i.e., when only the K channel is specified, the "do not add chromatic colorants" constraint is applied. The use of single-color black is prevalent for text. When there is no single-color black in the source image, the "full multi-dimensional" constraint condition is applied. A smooth transition can be provided for imagery with content spanning between the two constraint conditions, i.e., black only and no single-color black. This approach could be seen as defining constraint functions for a plurality of colorants, rather than just the specific colorant to be constrained.

A smooth transition can be implemented, for example, by interpolating between the constrained and unconstrained cases. One specific implementation can be described by defining a function HighLimitFunction(x) as the upper constraint limit for the "do not add chromatic colorants" constraint condition, which is presented by the upper bold-line function in FIG. 3. In this case, the interpolation between the "black only" and "no single-color black" cases could be represented as follows:

$$hlfm = HighLimitFunction (Max(C, M, Y)),$$

$$hlfk = HighLimitFunction (K),$$

$$Cmax = (1.0 - hlfk) * hlfm + hlfk * HighLimitFunction(C_{in}),$$

$$Mmax = (1.0 - hlfk) * hlfm + hlfk * HighLimitFunction(M_{in}),$$

$$Ymax = (1.0 - hlfk) * hlfm + hlfk * HighLimitFunction(Y_{in}),$$

where $(C_{max}, M_{max}, Y_{max})$ are the upper constraint limits for the color $(C_{in}, M_{in}, Y_{in})$, hlfm represents the upper constraint limit function based on the maximum of the chromatic colors, and hlfk represents the upper constraint limit function for K. Other interpolation functions could be used without significantly altering the methodology described above. Furthermore, this methodology may be applied to other color sets such as high fidelity color or custom color sets.

Although the examples described herein focus on application to CMYK matching, the CMT is not limited to only that color space. For example, these constraints can be applied for RGB to RGB mapping where the polarity of 0% and 100% colorants may be reversed. In this case, the "Do not add or remove colorants" and "Do not add or remove chromatic colorants" constraints are equivalent, and the "Do not add or remove black" does not apply. Further, this same methodology can be applied to other color sets such as Hi-Fi color, e.g., five or more colors, or custom color sets. Some color sets use as many as seven and sometimes eight different colors.

Also, the specific shape of the upper and lower constraint limits can be different than those shown in FIG. 3. For example, it may be desirable to utilize functions that maintain continuity of slope as well as continuity of function value, rather than piecewise linear functions. Specific device characteristics may also determine the best constraint function. For example, if a specific halftone device cannot maintain a dot below 2%, the function could maintain the lower limit above 2% over most of the region, and taper down to 0% only near the origin.

Users of high-resolution digital halftone proofers typically desire proofs having both dot-integrity and excellent color fidelity with respect to the proofing target, e.g., a press sheet. One-dimensional correction functions provide dot integrity but less color fidelity. Unconstrained multi-dimensional transforms, such as are typical of ICC device link profiles, can provide excellent color fidelity but may add or remove dots with respect to the proofing target. By imposing constraints on a multi-dimensional correction, it is possible to vary the size of only the dots that are present, just like the 1-D corrections, but optimize the size variations for each region of color space.

A dot-preserving multi-dimensional transform represents the best of both 1-D and unconstrained M-D transforms with potentially minimal reductions in color accuracy. These dot-preserving color transformations may also be used to make multiple presses in distributed print locations conform to a particular color specification, e.g., TR001. The TR001 standard is represented in ANSI CGATS.6-1995: "Graphic technology-Specifications for graphic arts printing-Type 1." Indeed, the use of multi-dimensional transforms has been avoided in the past when mapping to press for loss of dot-integrity reasons as described above.

EXAMPLE 1

The following example illustrates the application of constraints to a multi-dimensional color transformation technique in accordance with an embodiment of the present invention. In this example, a CMT as described herein was integrated within an Imation® Color Fidelity Module (Imation Corp., Oakdale, Minnesota), which is an ICC and Apple ColorSync-compliant color-matching module for the Apple Macintosh operating system. A number of device links, with various constraints imposed, were generated using a TR001 CMYK source (target) profile and Imation Matchprint™ Laserproof on Publication base as the destination profile. The TR001 ICC profile was constructed from the averaged spectral values from an IT8-7/3 extended target, which are published in the TR001 standard. The Matchprint™ Laserproof ICC profile was created from an Imation SpectralProfiler model file.

The device link constraint methods included: (a) do not add or remove CMYK, (b) do not add or remove K, (c) do not add or remove CMY, and (d) no constraints (full color mixing allowed). Proofs of the IT8-7/3 extended target, with 928 patches, were prepared using each of these constraint methods. For comparison, a fifth proof using one-dimensional corrections (optimized for the TR001 target) was also prepared. Cumulative histograms of the color errors for all five proofs are shown in FIG. 4. In FIG. 4, reference numeral 40 denotes unconstrained M-D, reference numeral 42 denotes the "do not add or remove CMY" M-D (option (c) above), reference numeral 44 denotes the "do not remove K" M-D (option (b) above), reference numeral 46 denotes the fully constrained "do not add or remove CMYK" M-D (option (a) above), and reference numeral 48 denotes a 1-D transformation. As one would expect, the constrained M-D histograms are bounded by the unconstrained M-D histogram on the left and the 1-D histogram on the right. The most striking feature of this graph is that the fully-constrained M-D transform (option (a) above) performs almost as well as the unconstrained M-D transform, indicating that it indeed does provide both excellent color fidelity and dot integrity.

**EXAMPLE 2**

The following example illustrates the application of a combination of constraints to a multi-dimensional color transformation technique, in accordance with another embodiment of the present invention, to better maintain black channel purity. In this example, a CMT as described herein was integrated within an Imation® Color Fidelity Module (Imation Corp., Oakdale, Minnesota), which is an ICC and Apple ColorSync-compliant color-matching module for the Apple Macintosh operating system.

A transformation was made between a SWOP proof condition and a particular press, relying on forward profiles generated for each of them. In this case, using an unconstrained mapping while maintaining overall colorimetric integrity as described herein, a source color of CMYK = (0%, 0%, 0%, 100%) was transformed to (32%, 9%, 0%, 97%). Thus, the press black was reddish, with the cyan and magenta being added to provide an exact color match. Using a combination of the "full multi-dimensional" and "do not add chromatic colorants" constraint conditions, the same source color was transformed to (0%, 0%, 0%, 98%), thereby preserving black channel purity, and dot integrity.

Another transformation was made between a SWOP proof condition and an Imation 4700 color proofer (Imation Corp., Oakdale, Minnesota), relying on forward profiles generated for each of them. In this case, an unconstrained mapping while maintaining overall colorimetric integrity as described herein resulted in transformation of a source color of CMYK = (0%, 0%, 0%, 100%) to (0%, 18%, 31%, 93%). Thus, the 4700 black was bluish, with magenta and yellow being added to provide an exact color match. Applying a combination of the "full multi-dimensional" and "do not add chromatic colorants" constraint conditions, the same source color was transformed to (0%, 0%, 0%, 95%). Again, black channel purity was achieved, e.g., providing preservation of sharpness and hue consistency for text, shadows, and the like.

**Claims**

1. A method for multi-dimensional color transformation comprising:

   applying a multi-dimensional color transformation for transformation of source device-dependent coordinates (20) to destination device-dependent coordinates (24), comprising the steps of

   (a) converting source device-dependent coordinates (20) to source device-independent coordinates,
   (b) constraining the destination device-dependent coordinates (24) to a range of destination device-dependent coordinates (24) within which colorimetrically matching destination device-dependent coordinates (24) are searched for by the multi-dimensional color transformation, said range being a function of the source device-dependent coordinates (20),
   wherein step (b) includes constraining the destination device-dependent coordinates (24) to prevent (i) addition of selected colorants not specified by the source device-dependent coordinates (20) and/or (ii) removal of selected colorants specified by the source device-dependent coordinates (20).
   (c) selecting destination device-dependent coordinates (24) from the range of destination-device dependent coordinates (24) obtained in step (b),
   (d) converting the selected destination device-dependent coordinates (24) to destination device-independent coordinates,
   (e) monitoring the resulting error calculated between the source device-independent coordinates and the destination device-independent coordinates,
   (f) using the selected destination device-dependent coordinates (24) as the result of the transformation of the source device-dependent coordinates (20) to the destination device-dependent coordinates (24) if the error calculation results in an error equal to or below a pre-determined value,
   (g) otherwise selecting other destination device-dependent coordinates (24) from the range of the destination device-dependent coordinates (24) obtained in step (b), and
   (h) repeating steps (d) to (g) until the error calculation results in an error equal to or below said predetermined value.

2. The method of claim 1, wherein the prevention of removal in step (b) Includes constraining the destination device-dependent coordinates (24) in the multi-dimensional color transformation to prevent removal of selected colorants present at corresponding dots specified by the source device-dependent coordinates (20).

3. The method of claim 1 or 2, wherein the prevention of removal in step (b) includes constraining the destination device-dependent coordinates (24) in the multi-dimensional color transformation to prevent removal of black colorant present at corresponding dots specified by the source device-dependent coordinates (20).

4. The method of any one of claims 1 to 3, wherein the prevention of removal in step (b) includes constraining the destination device-dependent coordinates (24) in the multi-dimensional color transformation to prevent removal of one or more chromatic colorants present at corresponding dots specified by the source device-dependent coordinates (20).

5. The method of any one of claims 1 to 4, wherein the prevention of addition in step (b) includes constraining the destination device-dependent coordinates (24) in the multi-dimensional color transformation to prevent addition of black colorant not present at corresponding dots specified by the source device-dependent coordinates (20).

6. The method of any one of claims 1 to 5, wherein the prevention of addition in step (b) includes constraining the destination device-dependent coordinates (24) in the multi-dimensional color transformation to prevent addition of one or more chromatic colorants not present at corresponding dots specified by the source device-dependent coordinates (20).

7. The method of any one of claims 1 to 6, wherein the prevention of addition in step (b) includes constraining the destination device-dependent coordinates (24) in the multi-dimensional color transformation to prevent addition of chromatic colorants for black-only dots specified by the source device-dependent coordinates (20).

8. The method of any one of claims 1 to 7, further comprising constraining the destination device-dependent coordinates (24) in the multidimensional color transformation based at least in part on constraints specified by a user.

9. The method of any one of claims 1 to 8, wherein each of the source device-dependent coordinates (20) and destination device-dependent coordinates (24) is defined by cyan, magenta, yellow, and black (CMYK) colorants.

10. A system for executing a method for multi-dimensional color transformation as in any of claims 1 to 9, the system comprising:

- a processor (12) that applies the multi-dimensional color transformation for transformation of source device-dependent coordinates (20) to destination device-dependent coordinates (24), and
- a memory (16) that stores constraints (32),
- wherein the processor (12) is programmed to apply the following steps:

(a) converting source device-dependent coordinates (20) to source device-independent coordinates,
(b) constraining the destination device-dependent coordinates (24) to a range of destination device-dependent coordinates (24) within which colorimetrically matching destination device-dependent coordinates (24) are searched for by the multi-dimensional color transformation, said range being a function of the source device-dependent coordinates (20),
wherein step (b) includes constraining the destination device-dependent coordinates (24) to prevent (i) addition of selected colorants not specified by the source device-dependent coordinates (20) and/or (ii) removal of selected colorants specified by the source device-dependent coordinates (20).
(c) selecting destination device-dependent coordinates (24) from the range of destination device-dependent coordinates (24) obtained in step (b),
(d) converting the selected destination device-dependent coordinates (24) to destination device-independent coordinates,
(e) monitoring the resulting error calculated between the source device-independent coordinates and the destination device-independent coordinates,
(f) using the selected destination device-dependent coordinates (24) as the result of the transformation of the source device-dependent coordinates (20) to the destination device-dependent coordinates (24) if the error calculation results in an error equal to or below a pre-determined value,
(g) otherwise selecting other destination device-dependent coordinates (24) from the range of the destination device-dependent coordinates (24) obtained in step (b),
(h) repeating steps (d) to (g) until the error calculation results in an error equal to or below said predetermined value.

11. A computer-readable medium containing program code that, when executed by a processor (12), performs a method for multi-dimensional color transformation as in any of claims 1 to 9.

# EP 1 181 812 B1

**Patentansprüche**

1. Verfahren zur multidimensionalen Farbtransformation mit:

    der Anwendung einer multidimensionalen Farbtransformation zur Transformation von quellenvorrichtungsabhängigen Koordinaten (20) in zielvorrichtungsabhängigen Koordinaten (24), mit den folgenden Schritten:

    (a) Umwandeln von quellenvorrichtungsabhängigen Koordinaten (20) in quellenvorrichtungsunabhängige Koordinaten,
    (b) Beschränken der zielvorrichtungsabhängigen Koordinaten (24) auf einen Bereich von zielvorrichtungsabhängigen Koordinaten (24), in welchem kolorimetrisch zusammenpassende zielvorrichtungsabhängige Koordinaten (24) mittels der multidimensionalen Farbtransformation gesucht werden, wobei der Bereich eine Funktion der quellenvorrichtungsabhängigen Koordinaten (20) ist,
    wobei der Schritt (b) das Beschränken der zielvorrichtungsabhängigen Koordinaten (24) aufweist, um (i) das Hinzufügen von ausgewählten Farben, welche nicht durch die quellenvorrichtungsabhängigen Koordinaten (20) spezifiziert sind, und/oder (ii) das Entfernen von durch die quellenvorrichtungsabhängigen Koordinaten (20) spezifizierten Farben zu verhindern,
    (c) Auswählen von zielvorrichtungsabhängigen Koordinaten (24) aus dem in Schritt (b) erhaltenen Bereich von zielvorrichtungsabhängigen Koordinaten (24),
    (d) Umwandeln der gewählten zielvorrichtungsabhängigen Koordinaten (24) in zielvorrichtungsunabhängige Koordinaten,
    (e) Überwachen des sich ergebenden Fehlers, der zwischen den quellenvorrichtungsabhängigen Koordinaten und den zielvorrichtungsunabhängigen Koordinaten berechnet wurde,
    (f) Verwenden der gewählten zielvorrichtungsabhängigen Koordinaten (24) als das Ergebnis der Transformation der quellenvorrichtungsabhängigen Koordinaten (20) in die zielvorrichtungsabhängigen Koordinaten (24), wenn die Fehlerberechnung einen Fehler ergibt, der gleich einem vorbestimmten Wert oder geringer als dieser ist,
    (g) anderenfalls, Auswählen anderer zielvorrichtungsabhängiger Koordinaten (24) aus dem in Schritt (b) erhaltenen Bereich von zielvorrichtungsabhängigen Koordinaten (24), und
    (h) Wiederholen der Schritte (d) bis (g), bis die Fehlerberechnung zu einem Fehler führt, der gleich dem vorbestimmten Wert oder geringer als dieser ist.

2. Verfahren nach Anspruch 1, bei dem das Verhindern des Entfernens in Schritt (b) das Beschränken der zielvorrichtungsabhängigen Koordinaten (24) in der multidimensionalen Farbtransformation beinhaltet, um das Entfernen von ausgewählten Farben, welche an durch die quellenvorrichtungsabhängigen Koordinaten (20) spezifizierten entsprechenden Punkten vorliegen, zu verhindern.

3. Verfahren nach Anspruch 1 oder 2, bei dem das Verhindern des Entfernens im Schritt (b) das Beschränken der zielvorrichtungsabhängigen Koordinaten (24) in der multidimensionalen Farbtransformation beinhaltet, um das Entfernen von schwarzer Farbe, welche an durch die quellenvorrichtungsabhängigen Koordinaten (20) spezifizierten entsprechenden Punkten vorliegt, zu verhindern.

4. Verfahren nach einem der Ansprüche 1 bis 3, bei dem das Verhindern des Entfernens im Schritt (b) das Beschränken der zielvorrichtungsabhängigen Koordinaten (24) in der multidimensionalen Farbtransformation beinhaltet, um das Entfernen von einem oder mehreren chromatischen Farben, welche an durch die quellenvorrichtungsabhängigen Koordinaten (20) spezifizierten entsprechenden Punkten vorliegen, zu verhindern.

5. Verfahren nach einem der Ansprüche 1 bis 4, bei dem das Verhindern des Hinzufügens im Schritt (b) das Beschränken der zielvorrichtungsabhängigen Koordinaten (24) in der multidimensionalen Farbtransformation beinhaltet, um das Hinzufügen von schwarzer Farbe, welche an durch die quellenvorrichtungsabhängigen Koordinaten (20) spezifizierten entsprechenden Punkten nicht vorliegen, zu verhindern.

6. Verfahren nach einem der Ansprüche 1 bis 5, bei dem das Verhindern des Hinzufügens im Schritt (b) das Beschränken der zielvorrichtungsabhängigen Koordinaten (24) in der multidimensionalen Farbtransformation beinhaltet, um das Hinzufügen von einer oder mehreren chromatischen Farben, welche an durch die quellenvorrichtungsabhängigen Koordinaten (20) spezifizierten entsprechenden Punkten nicht vorliegen, zu verhindern.

7. Verfahren nach einem der Ansprüche 1 bis 6, bei dem das Verhindern des Hinzufügens im Schritt (b) das Beschrän-

9

ken der zielvorrichtungsabhängigen Koordinaten (24) in der multidimensionalen Farbtransformation beinhaltet, um das Hinzufügen von einer oder mehreren chromatischen Farben zu ausschließlich schwarzen Punkten, welche durch die quellenvorrichtungsabhängigen Koordinaten (20) spezifiziert sind, zu verhindern.

8. Verfahren nach einem der Ansprüche 1 bis 7, ferner mit dem zumindest teilweise auf der Basis von durch einen Benutzer spezifizierten Beschränkungen erfolgenden Beschränken der zielvorrichtungsabhängigen Koordinaten (24) in der multidimensionalen Farbtransformation.

9. Verfahren nach einem der Ansprüche 1 bis 8, bei welchem die quellenvorrichtungsabhängigen Koordinaten (20) und zielvorrichtungsabhängigen Koordinaten (24) durch die Farben Cyan, Magenta, Gelb und Schwarz (CMYK) definiert sind.

10. System zur Durchführung eines Verfahrens zur multidimensionalen Farbtransformation nach einem der Ansprüche 1 bis 9, wobei das System aufweist:

   - einen Prozessor (12), welcher die multidimensionale Farbtransformation zur Transformation von quellenvorrichtungsabhängigen Koordinaten (20) in zielvorrichtungsabhängigen Koordinaten (24) anwendet, und
   - einen Speicher (16), in welchem Beschränkungen (32) gespeichert sind,
   - wobei der Prozessor (12) zum Anwenden der folgenden Schritte programmiert ist:

   (a) Umwandeln von quellenvorrichtungsabhängigen Koordinaten (20) in quellenvorrichtungsunabhängige Koordinaten,
   (b) Beschränken der zielvorrichtungsabhängigen Koordinaten (24) auf einen Bereich von zielvorrichtungsabhängigen Koordinaten (24), in welchem kolorimetrisch zusammenpassende zielvorrichtungsabhängige Koordinaten (24) mittels der multidimensionalen Farbtransformation gesucht werden, wobei der Bereich eine Funktion der quellenvorrichtungsabhängigen Koordinaten (20) ist,
   wobei der Schritt (b) das Beschränken der zielvorrichtungsabhängigen Koordinaten (24) aufweist, um (i) das Hinzufügen von ausgewählten Farben, welche nicht durch die quellenvorrichtungsabhängigen Koordinaten (20) spezifiziert sind, und/oder (ii) das Entfernen von durch die quellenvorrichtungsabhängigen Koordinaten (20) spezifizierten Farben zu verhindern,
   (c) Auswählen von zielvorrichtungsabhängigen Koordinaten (24) aus dem in Schritt (b) erhaltenen Bereich von zielvorrichtungsabhängigen Koordinaten (24),
   (d) Umwandeln der gewählten zielvorrichtungsabhängigen Koordinaten (24) in zielvorrichtungsunabhängige Koordinaten,
   (e) Überwachen des sich ergebenden Fehlers, der zwischen den quellenvorrichtungsabhängigen Koordinaten und den zielvorrichtungsunabhängigen Koordinaten berechnet wurde,
   (f) Verwenden der gewählten zielvorrichtungsabhängigen Koordinaten (24) als das Ergebnis der Transformation der quellenvorrichtungsabhängigen Koordinaten (20) in die zielvorrichtungsabhängigen Koordinaten (24), wenn die Fehlerberechnung einen Fehler ergibt, der gleich einem vorbestimmten Wert oder geringer als dieser ist,
   (g) anderenfalls, Auswählen anderer zielvorrichtungsabhängiger Koordinaten (24) aus dem in Schritt (b) erhaltenen Bereich von zielvorrichtungsabhängigen Koordinaten (24), und
   (h) Wiederholen der Schritte (d) bis (g), bis die Fehlerberechnung zu einem Fehler führt, der gleich dem vorbestimmten Wert oder geringer als dieser ist.

11. Computer-lesbares Medium, welches einen Programmcode enthält, welcher bei der Ausführung durch einen Prozessor (12) ein Verfahren zur multidimensionalen Farbtransformation nach einem der Ansprüche 1 bis 9 durchführt.

**Revendications**

1. Procédé de transformation de couleur multidimensionnelle comprenant:

   l'application d'une transformation de couleur multidimensionnelle pour la transformation des coordonnées (20) dépendantes d'un dispositif de source en des coordonnées (24) dépendantes d'un dispositif de destination, comprenant les étapes suivantes:

   (a) convertir des coordonnées (20) dépendantes d'un dispositif de source en des coordonnées non-dépendantes d'un dispositif de source,

(b) limiter les coordonnées (24) dépendantes d'un dispositif de destination à une gamme de coordonnées (24) dépendantes d'un dispositif de destination dans lequel on recherche, par la transformation de couleur multidimensionnelle, des coordonnées (24) dépendantes d'un dispositif de destination colorimétriquement correspondantes, ladite gamme étant fonction des coordonnées (20) dépendantes d'un dispositif de source, l'étape (b) comprenant la limitation des coordonnées (24) dépendantes d'un dispositif de destination afin d'empêcher (i) l'addition de colorants choisis non-spécifiés par les coordonnées (20) dépendantes d'un dispositif de source, et/ou (ii) l'élimination de colorants choisis spécifiés par les coordonnées (20) dépendantes d'un dispositif de source,

(c) choisir des coordonnées (24) dépendantes d'un dispositif de destination dans la gamme de coordonnées (24) dépendantes d'un dispositif de destination obtenue dans l'étape (b),

(d) convertir les coordonnées (24) dépendantes d'un dispositif de destination choisies en des coordonnées non-dépendantes d'un dispositif de destination,

(e) contrôler l'erreur résultant calculé entre les coordonnées dépendantes d'un dispositif de source et les coordonnées dépendantes d'un dispositif de destination,

(f) utiliser les coordonnées (24) dépendantes d'un dispositif de destination choisies comme résultat de la transformation des coordonnées (20) dépendantes d'un dispositif de source en des coordonnées (24) dépendantes d'un dispositif de destination, si le calcul d'erreur produit un erreur égal à ou moins qu'un valeur prédéterminé,

(g) autrement, choisir d'autres coordonnées (24) dépendantes d'un dispositif de destination dans la gamme de coordonnées (24) dépendantes d'un dispositif de destination obtenue dans l'étape (b), et

(h) répéter les étapes (d) à (g) jusqu'à le calcul d'erreur résulte en un erreur égal à ou moins que le valeur prédéterminé.

2. Procédé selon la revendication 1, dans lequel l'empêchement de l'élimination dans l'étape (b) comprend la limitation des coordonnées (24) dépendantes d'un dispositif de destination dans la transformation de couleur multidimensionnelle pour empêcher l'élimination de colorants choisis existants à des points correspondants spécifiés par les coordonnées (20) dépendantes d'un dispositif de source.

3. Procédé selon la revendication 1 ou 2, dans lequel l'empêchement de l'élimination dans l'étape (b) comprend la limitation des coordonnées (24) dépendantes d'un dispositif de destination dans la transformation de couleur multidimensionnelle pour empêcher l'élimination de colorant noir existant à des points correspondants spécifiés par les coordonnées (20) dépendantes d'un dispositif de source.

4. Procédé selon une quelconque des revendications 1 à 3, dans lequel l'empêchement de l'élimination dans l'étape (b) comprend la limitation des coordonnées (24) dépendantes d'un dispositif de destination dans la transformation de couleur multidimensionnelle pour empêcher l'élimination d'un ou plusieurs colorants chromatiques existants à des points correspondants spécifiés par les coordonnées (20) dépendantes d'un dispositif de source.

5. Procédé selon une quelconque des revendications 1 à 4, dans lequel l'empêchement de l'addition dans l'étape (b) comprend la limitation des coordonnées (24) dépendantes d'un dispositif de destination dans la transformation de couleur multidimensionnelle pour empêcher l'addition d'un colorant noir non existant à des points correspondants spécifiés par les coordonnées (20) dépendantes d'un dispositif de source.

6. Procédé selon une quelconque des revendications 1 à 5, dans lequel l'empêchement de l'addition dans l'étape (b) comprend la limitation des coordonnées (24) dépendantes d'un dispositif de destination dans la transformation de couleur multidimensionnelle pour empêcher l'addition d'un ou plusieurs colorants chromatiques non existants à des points correspondants spécifiés par les coordonnées (20) dépendantes d'un dispositif de source.

7. Procédé selon une quelconque des revendications 1 à 6, dans lequel l'empêchement de l'addition dans l'étape (b) comprend la limitation des coordonnées (24) dépendantes d'un dispositif de destination dans la transformation de couleur multidimensionnelle pour empêcher l'addition de colorants chromatiques pour des points seulement noirs spécifiés par les coordonnées (20) dépendantes d'un dispositif de source.

8. Procédé selon une quelconque des revendications 1 à 7, comprenant en outre l'étape de limiter les coordonnées (24) dépendantes d'un dispositif de destination dans la transformation de couleur multidimensionnelle, ai moins partiellement basé sur des limitations spécifiées par l'utilisateur.

9. Procédé selon une quelconque des revendications 1 à 8, dans lequel chacune des coordonnées (24) dépendantes d'un dispositif de destination et des coordonnées (20) dépendantes d'un dispositif de source est définie par des colorants en cyan, magenta, jaune et noir (CMYK).

10. Système pour l'exécution d'un procédé de transformation de couleur multidimensionnelle selon une quelconque des revendications 1 à 9, ledit système comprenant:

- un processeur (12) pour l'application de la transformation de couleur multidimensionnelle pour la transformation des coordonnées (20) dépendantes d'un dispositif de source en des coordonnées (24) dépendantes d'un dispositif de destination, et
- une mémoire (16) pour stocker des limitations (32),
- lequel processeur (12) étant programmé pour appliquer les étapes suivantes:

(a) convertir des coordonnées (20) dépendantes d'un dispositif de source en des coordonnées non-dépendantes d'un dispositif de source,
(b) limiter les coordonnées (24) dépendantes d'un dispositif de destination à une gamme de coordonnées (24) dépendantes d'un dispositif de destination dans lequel on recherche, par la transformation de couleur multidimensionnelle, des coordonnées (24) dépendantes d'un dispositif de destination colorimétriquement correspondantes, ladite gamme étant fonction des coordonnées (20) dépendantes d'un dispositif de source, l'étape (b) comprenant la limitation des coordonnées (24) dépendantes d'un dispositif de destination afin d'empêcher (i) l'addition de colorants choisis non-spécifiés par les coordonnées (20) dépendantes d'un dispositif de source, et/ou (ii) l'élimination de colorants choisis spécifiés par les coordonnées (20) dépendantes d'un dispositif de source,
(c) choisir des coordonnées (24) dépendantes d'un dispositif de destination dans la gamme de coordonnées (24) dépendantes d'un dispositif de destination obtenue dans l'étape (b),
(d) convertir les coordonnées (24) dépendantes d'un dispositif de destination choisies en des coordonnées non-dépendantes d'un dispositif de destination,
(e) contrôler l'erreur résultant calculé entre les coordonnées dépendantes d'un dispositif de source et les coordonnées dépendantes d'un dispositif de destination,
(f) utiliser les coordonnées (24) dépendantes d'un dispositif de destination choisies comme résultat de la transformation des coordonnées (20) dépendantes d'un dispositif de source en des coordonnées (24) dépendantes d'un dispositif de destination, si le calcul d'erreur produit un erreur égal à ou moins qu'un valeur prédéterminé,
(g) autrement, choisir d'autres coordonnées (24) dépendantes d'un dispositif de destination dans la gamme de coordonnées (24) dépendantes d'un dispositif de destination obtenue dans l'étape (b), et
(h) répéter les étapes (d) à (g) jusqu'à le calcul d'erreur résulte en un erreur égal à ou moins que le valeur prédéterminé.

11. Médium lisible par ordinateur, contenant un code de logiciel, qui, quand il est exécuté par un processeur (12), déroule un procédé de transformation de couleur multidimensionnelle selon une quelconque des revendications 1 à 9.

14

10

USER
INTERFACE

18

12

SOURCE
DATA → PROCESSOR → DESTINATION
DEVICE

16

DEVICE
PROFILES

*Fig. 1*

*Fig. 2*

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0611231 A
- EP 0534871 A
- EP 0779736 A

### Non-patent literature cited in the description

- Graphic technology-Specifications for graphic arts printing-Type 1. *ANSI CGATS.6-1995,* 1995